# EUROPEAN PATENT SPECIFICATION

(11) **EP 3 062 582 B1**
(45) Date of publication and mention of the grant of the patent: **11.04.2018**
(21) Application number: 15156329.3
(22) Date of filing: 24.02.2015
(51) Int. Cl.: H04W 88/04

(54) **APPARATUSES, METHODS AND COMPUTER PROGRAMS FOR A BACKHAUL MODEM AND AN ACCESS BASE STATION TRANSCEIVER OF A RELAY STATION TRANSCEIVER**
VORRICHTUNGEN, VERFAHREN UND COMPUTERPROGRAMME FÜR EIN BACKHAUL-MODEM UND EINEN BASISSTATION-SENDER-EMPFÄNGER EINES RELAISSTATION-SENDER-EMPFÄNGERS
APPAREILS, PROCÉDÉS ET PROGRAMMES INFORMATIQUES POUR UN MODEM DE RÉSEAU TERRESTRE ET ÉMETTEUR-RÉCEPTEUR DE STATION DE BASE D'ACCÈS D'UNE STATION RELAIS D'ÉMISSION-RÉCEPTION

(43) Date of publication of application: 31.08.2016
(73) Proprietor: Nash Innovations GmbH, 90491 Nürnberg (DE)
(72) Inventor: Dr. Keuker, Claus, 82327 Tutzing (DE)
(74) Representative: 2SPL Patentanwälte PartG mbB

(56) References cited:
- WO-A1-2010/033065
- US-A1- 2012 264 368
- US-A1- 2013 072 192
- US-A1- 2014 099 881
- "3rd Generation Partnership Project; Technical Specification Group Radio Access Network; Evolved Universal Terrestrial Radio Access (E-UTRA); Study on mobile relay (Release 12)", 3GPP DRAFT; 36836-C00, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 27 June 2014 (2014-06-27), XP050907468, Retrieved from the Internet: URL:http://www.3gpp.org/ftp/Specs/2014-12/ Rel-12/36_series/ [retrieved on 2014-06-27]

## Description

### Technical Field

Embodiments relate to apparatuses, methods and computer programs for a backhaul modem and an access base station transceiver of a relay station transceiver, and more particularly, but not exclusively, to controlling interference between a backhaul modem and an access base station transceiver of a relay station transceiver.

### Background

Demands for higher data rates for mobile services are steadily increasing. At the same time modem mobile communication systems as 3rd Generation systems (3G) and 4th Generation systems (4G) provide enhanced technologies, which enable higher spectral efficiencies and allow for higher data rates and cell capacities. Users of today's handhelds become more difficult to satisfy. While old feature phones generated only data or voice traffic, current smartphones, tablets, and netbooks run various applications in parallel that can fundamentally differ from each other. Compared to conventional phones, this application mix leads to a number of new characteristics. For example, highly dynamic load statistics result, where the average load is increasing. Moreover, the number of networks for voice and data access is also increasing, therewith, roaming options between these networks become available when multiple network layers overlap or at network boundaries, respectively.

Network planning and deployment in cellular communication systems is based on fixed, stationary base stations and may further take into account mobile relay station transceivers, which may reside in vehicles, e.g. cars, buses, trains, ships, planes, etc. As demands for digital services are increasing users' expectation of service availability also increases such that mobile access points experience a wider deployment, especially in mass transportation. Interference coordination and mitigation becomes a more severe problem in networks comprising mobile base station transceivers, for example, as part of mobile relay station transceivers.

Document US2013/0072192 A1 discloses a concept for frequency band selection in a communication scenario involving a serving base station, a relay station and user equipment. A spectrum sensing entity determines information on which frequency bands are available and a spectrum managing entity assigns different frequency bands for a backhaul link between the serving base station and the relay station and an access link between the relay station and the user equipment. Document US 2012/0264368 A1 describes a concept for donor cell selection in a communication scenario involving a relay station. First and second cell management information is obtained for a candidate cell and the relay station.

### Summary

Some simplifications may be made in the following summary, which is intended to highlight and introduce some aspects of the various exemplary embodiments, but such simplifications are not intended to limit the scope of the invention(s). Detailed descriptions of a preferred exemplary embodiment adequate to allow those of ordinary skill in the art to make and use the inventive concepts will follow in later sections.

Various embodiments provide apparatuses, methods and a computer programs for a backhaul modem and an access base station transceiver of a relay station transceiver. Embodiments may provide a mechanism to reduce or control interference between a backhaul modem and an access base station transceiver of a relay station transceiver by enabling a communication between the backhaul modem and the access base station transceiver. For example, embodiments may allow communicating information related to used radio resources on the backhaul link, between the backhaul modem and a stationary backhaul base station transceiver of a mobile communication system, to the access base station transceiver. Such information can then be considered by the access base station transceiver on an access link, when scheduling or serving associated mobile transceivers, such that interference or simultaneous usage of the same radio resources on the backhaul link and the access link can be reduced or even avoided.

Embodiments provide an apparatus for a backhaul modem of a relay station transceiver. The relay station transceiver comprises the backhaul modem for communicating with one or more backhaul base station transceivers of a mobile communication system, e.g. to establish a backhaul link. The relay station transceiver comprises an access base station transceiver for generating at least one cell of the mobile communication system for communicating with one or more mobile transceivers. The backhaul modem apparatus comprises a transceiver module to communicate with the one or more backhaul base station transceivers of the mobile communication system using a first set of radio resources. The backhaul modem apparatus further comprises an interface to communicate with the access base station transceiver, and a control module to control the transceiver module and the interface. The control module is further configured to monitor the first set of radio resources used to communicate with the one or more backhaul base station transceivers of the mobile communication system using the transceiver module. The control module is further configured to communicate information related to a second set of radio resources with the access base station transceiver using the interface. The second set of radio resources is different from the first set of radio resources.

Furthermore, embodiments provide an apparatus for an access base station transceiver of a relay station transceiver. The relay station transceiver comprises a backhaul modem for communicating with one or more backhaul base station transceivers of a mobile communication system using a first set of radio resources. The relay station transceiver comprises the access base station transceiver for generating at least one cell of the mobile communication system for communicating with one or more mobile transceivers. The access base station transceiver apparatus comprises a transceiver module to communicate with the one or more mobile transceivers using a second set of radio resources. The access base station transceiver apparatus further comprises an interface to communicate with the backhaul modem, and a control module to control the transceiver module and the interface. The control module is further configured to communicate information related to the second set of radio resources with the backhaul modem. The control module is further configured to assign radio resources from the second set of radio resources to the transceiver module to communicate with the one or more mobile transceivers.

Embodiments may enable interference control or coordination between a backhaul modem and an access base station transceiver of a relay station transceiver.

In some embodiments the control module of the backhaul modem may be configured to receive information related to the first set of radio resources from the backhaul base station transceiver using the transceiver module. The control module of the backhaul modem may be configured to communicate the information related to the second set of radio resources to the access base station transceiver such that interference between the communication with the backhaul base station transceiver and the access base station transceiver is controlled. Embodiments may enable a dynamic communication between the backhaul modem and the access base station transceiver such that radio resources used on the backhaul link and on the access link can be controlled or coordinated to reduce interference.

In further embodiments the control module of the backhaul modem may be configured to determine the information related to the second set of radio resources such that a set of common radio resources, which are used in the first set of radio resources and in the second set of radio resources, is reduced. Embodiments may enable a controlled or coordinated sharing of the resources provided by the mobile communication system between the backhaul link and the access link. The first set of radio resources and the second set of radio resources may be comprised in the same frequency band and embodiments may reduce or even avoid collisions of the frequency resources used on the backhaul link and on the access link. The first set of radio resources and the second set of radio resources may be a subset of a system set of radio resources used for communicating in the mobile communication system. Embodiments may enable coordination or control of time, frequency, code and/or spatial resources used on the backhaul link and on the access link.

In some embodiments the control module of the backhaul modem may be configured to provide information related to a quality of radio resources to the backhaul base station transceiver. The control module of the backhaul modem may be configured to provide information related to a degraded quality of the radio resources of the second set of radio recourses to the backhaul base station transceiver. Embodiments may enable coordination of the radio resources of the backhaul link in order to free, reserve or control resources available for the access link. In some embodiments the control module of the access base station transceiver may be configured to provide information related to a load condition of the access base station transceiver to the backhaul modem using the interface. The control module of the backhaul modem may be configured to obtain information related to a load condition of the access base station transceiver from the access base station transceiver using the interface. The control module of the backhaul modem may be configured to base the information related to the degraded quality of the radio resources of the second set of radio recourses on the information related to the load condition at the access base station transceiver. Embodiments may enable a reporting mechanism on the load or utilization of the radio resources on the access link to the backhaul modem, which may then accordingly coordinate the resources on the backhaul link, e.g. by accordingly manipulating quality measurements.

In further embodiments the control module of the backhaul modem may be configured to store information related to a usage history of the radio resources of the first set over a time period and provide information related to the usage history to the access base station transceiver using the interface. The control module of the access base station transceiver may be configured to obtain information related to a usage history of the radio resources of the first set over a time period from the backhaul modem using the interface. Embodiments may enable the access base station transceiver to coordinate radio resources used on the access link based on a resource utilization history of the backhaul link.

Embodiments provide a method for a backhaul modem of a relay station transceiver. The relay station transceiver comprises the backhaul modem for communicating with one or more backhaul base station transceivers of a mobile communication system. The relay station transceiver comprises an access base station transceiver for generating at least one cell of the mobile communication system for communicating with one or more mobile transceivers. The method for the backhaul modem comprises communicating with the one or more backhaul base station transceivers of the mobile communication system using a first set of radio resources. The method further comprises communicating with the access base station transceiver, and monitoring the first set of radio resources used to communicate with the one or more backhaul base station transceivers of the mobile communication system. The method further comprises communicating information related to a second set of radio resources with the access base station transceiver. The second set of radio resources is different from the first set of radio resources.

Embodiments provide a method for an access base station transceiver of a relay station transceiver. The relay station transceiver comprises a backhaul modem for communicating with one or more backhaul base station transceivers of a mobile communication system using a first set of radio resources. The relay station transceiver comprises the access base station transceiver for generating at least one cell of the mobile communication system for communicating with one or more mobile transceivers. The method for the access base station transceiver comprises communicating with the one or more mobile transceivers using a second set of radio resources. The method further comprises communicating information related to the second set of radio resources with the backhaul modem. The method further comprises assigning radio resources from the second set of radio resources to communicate with the one or more mobile transceivers. The second set of radio resources is different from the first set of radio resources.

Embodiments further provide a computer program having a program code for performing one or more of the above described methods, when the computer program is executed on a computer, processor, or programmable hardware. A further embodiment is a computer readable storage medium storing instructions which, when executed by a computer, processor, or programmable hardware, cause the computer to implement one of the methods described herein.

### Brief description of the figures

Some other features or aspects will be described using the following non-limiting embodiments of apparatuses and/or methods and/or computer programs and/or computer program products by way of example only, and with reference to the accompanying figures, in which
Fig. 1 illustrates a block diagram of an embodiment of an apparatus for a backhaul modem and an embodiment of an apparatus for an access base station transceiver;
Fig. 2 shows further embodiments in a network scenario;
Fig. 3 shows an embodiment of a mobile relay station transceiver in a vehicle;
Fig. 4 shows a block diagram of a flow chart of an embodiment of a method for a backhaul modem; and
Fig. 5 shows a block diagram of a flow chart of an embodiment of a method for an access base station transceiver.

### Description of Embodiments

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Embodiments may provide a way to manage the interference of a relay station transceiver, for example, comprising a vehicular small cell and a wireless backhaul device, in the so called "shared-carrier-case", in which the same radio resources may be available for use on a backhaul link and on an access link. In the following some embodiments will be described which make use of a mobile relay station transceiver, for example, implemented in a vehicle. The same considerations and embodiments can be applied to a stationary relay station transceiver. The vehicle may correspond to a car in the following embodiments; it could also correspond to any other vehicle, such as a train, a subway, a plane, a ship, a truck, etc.

Vehicular small cells, which are connected to a serving network by a wireless link (backhaul link) may employ the same frequency band for an access link. The location of a vehicular small cell may be very dynamic and potentially might not be predicted in time. This may particularly be true for cars or other non-rail based transportation systems. For rail based transportation systems the problem may be somewhat relaxed, as the vehicle may only move along well defined routes, but the general problem still exists. This strong mobility of the vehicular small cells may render traditional static Radio Frequency (RF)-planning based interference and frequency management approaches not applicable. Dynamic interference management relying on interface relations between base stations might not be used as the effort to create base station, e.g. eNB, relations is considered as too dynamic and difficult to be implemented, for example, as the addresses of the base stations, e.g. eNB's, might not be available for the vehicular small cell. Potentially (probably) a vehicular small cell may transmit on the same carrier as the base station, e.g. eNB, the backhaul device or modem is connected to. This is called the "shared carrier case". The probability of such a shared carrier case is relatively high as mobile network operators most probably do not allocate a special frequency band to vehicular small cells.

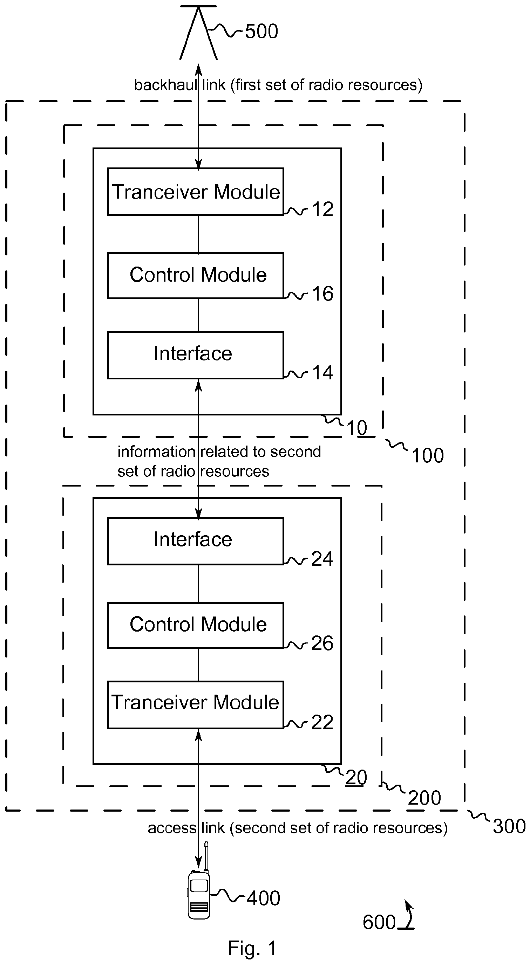

Fig. 1 illustrates a block diagram of an embodiment of an apparatus 10 for a backhaul modem 100 and an embodiment of an apparatus 20 for an access base station transceiver 200. Embodiments also provide a backhaul modem 100 (shown optionally in Fig. 1 as indicated by the broken lines) comprising an embodiment of the backhaul modem apparatus 10. Embodiments further provide an access base station transceiver 200 (shown optionally in Fig. 1 as indicated by the broken lines) comprising an embodiment of the access base station transceiver apparatus 20. Embodiments further provide a relay station transceiver 300 (shown optionally in Fig. 1 as indicated by the broken lines) or mobile relay station transceiver comprising an embodiment of the backhaul modem 100 and an embodiment of the access base station transceiver 200.

Fig. 1 depicts an embodiment of an apparatus 10 for a backhaul modem 100 of a relay station transceiver 300. The relay station transceiver 300 comprises the backhaul modem 100 for communicating with one or more backhaul base station transceivers 500 of a mobile communication system 600. This link is also referred to as backhaul link. Communication on the backhaul link may take place in both directions, uplink (transmission from the backhaul modem 100 to the backhaul base station transceiver 500) and downlink (transmission from the backhaul base station transceiver 500 to the backhaul modem 100). The relay station transceiver 300 comprises an access base station transceiver 200 for generating at least one cell of the mobile communication system 600 for communicating with one or more mobile transceivers 400. This link is also referred to as access link. Communication on the access link may take place in both directions, uplink (transmission from the mobile transceiver 400 to the access base station transceiver 200) and downlink (transmission from the access base station transceiver 200 to the mobile transceiver 400). The apparatus 10 is also referred to as backhaul modem apparatus.

The apparatus 10 comprises a transceiver module 12 to communicate with the one or more backhaul base station transceivers 500 of the mobile communication system 600 using a first set of radio resources. The apparatus 10 further comprises an interface 14 to communicate with the access base station transceiver 200, and the apparatus 10 comprises a control module 16, which is coupled to the transceiver module 12 and to the interface 14. The control module 16 is configured to control the transceiver module 12 and the interface 14. The control module is further configured to monitor the first set of radio resources used to communicate with the one or more backhaul base station transceivers 500 of the mobile communication system 600 using the transceiver module 12. The control module is further configured to communicate information related to a second set of radio resources with the access base station transceiver 200 using the interface 14. The second set of radio resources is different from the first set of radio resources. The second set of radio resources may be non-overlapping or orthogonal to the first set of radio resources. In some embodiments, there may be at least one radio resource in the second set of radio resources, which differs from the first set of radio resources, or vice versa. Some embodiments may keep the number of radio resources, which are comprised in the second set of radio resources and in the first set of radio resources, low, for example, as low as possible.

Fig. 1 further illustrates an embodiment of an apparatus 20 for the access base station transceiver 200 of the relay station transceiver 300. The relay station transceiver 300 comprises the backhaul modem 100 for communicating with the one or more backhaul base station transceivers 500 of the mobile communication system 600 using the first set of radio resources. The relay station transceiver 300 comprises the access base station transceiver 200 to generate the at least one cell of the mobile communication system 600 for communicating with one or more mobile transceivers 400. The apparatus 20 is also referred to as access base station transceiver apparatus 20. The apparatus 20 comprises a transceiver module 22 to communicate with the one or more mobile transceivers 400 using a second set of radio resources. The apparatus 20 further comprises an interface 24 to communicate with the backhaul modem 100. The apparatus comprises a control module 26 to control the transceiver module 22 and the interface 24. The control module 26 is configured to communicate information related to the second set of radio resources with the backhaul modem 100. The control module 26 is further configured to assign radio resources from the second set of radio resources to the transceiver module 22 to communicate with the one or more mobile transceivers 400. The second set of radio resources is different from the first set of radio resources.

It is to be noted that the term communication or to communicate is to be understood in obtaining information and/or providing information, for example, a module or an entity communicating with another entity, may transmit to the other entity and/or receive information from the other entity.

In embodiments the mobile communication system 600 may, for example, correspond to one of the mobile communication systems standardized by the 3^{rd} Generation Partnership Project (3GPP), e.g. Global System for Mobile Communications (GSM), Enhanced Data rates for GSM Evolution (EDGE), GSM EDGE Radio Access Network (GERAN), High Speed Packet Access (HSPA), Universal Terrestrial Radio Access Network (UTRAN) or Evolved UTRAN (E-UTRAN), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc. In the following the terms mobile communication system and mobile communication network are used synonymously.

The mobile communication system may comprise a plurality of transmission points or base station transceivers operable to communicate radio signals with a mobile transceiver. In embodiments, the mobile communication system may comprise mobile transceivers, relay station transceivers and base station transceivers. The relay station transceivers and base station transceivers can be composed of one or more central units and one or more remote units.

A mobile transceiver may correspond to a smartphone, a cell phone, User Equipment (UE), a laptop, a notebook, a personal computer, a Personal Digital Assistant (PDA), a Universal Serial Bus (USB) -stick, a tablet computer, a car, etc. A mobile transceiver or terminal may also be referred to as UE or user in line with the 3GPP terminology. A base station transceiver can be located in the fixed or stationary part of the network or system. A base station transceiver may correspond to a remote radio head, a transmission point, an access point, a macro cell, a small cell, a micro cell, a pico cell, a femto cell, a metro cell etc. The term small cell may refer to any cell smaller than a macro cell, i.e. a micro cell, a pico cell, a femto cell, or a metro cell. Moreover, a femto cell is considered smaller than a pico cell, which is considered smaller than a micro cell. A base station transceiver can be a wireless interface of a wired network, which enables transmission and reception of radio signals to a UE, mobile transceiver or relay transceiver. Such a radio signal may comply with radio signals as, for example, standardized by 3GPP or, generally, in line with one or more of the above listed systems. Thus, a base station transceiver may correspond to a NodeB, an eNodeB, a BTS, an access point, etc. A relay station transceiver may correspond to an intermediate network node in the communication path between a base station transceiver and a mobile station transceiver. A relay station transceiver may forward a signal received from a mobile transceiver to a base station transceiver, signals received from the base station transceiver to the mobile station transceiver, respectively.

The mobile communication system may be cellular. The term cell refers to a coverage area of radio services provided by a transmission point, a remote unit, a remote head, a remote radio head, a base station transceiver, relay transceiver or a NodeB, an eNodeB, respectively. The terms cell and base station transceiver may be used synonymously. In some embodiments a cell may correspond to a sector. For example, sectors can be achieved using sector antennas, which provide a characteristic for covering an angular section around a base station transceiver or remote unit. In some embodiments, a base station transceiver or remote unit may, for example, operate three or six cells covering sectors of 120° (in case of three cells), 60° (in case of six cells) respectively. Likewise a relay transceiver may establish one or more cells in its coverage area. A mobile transceiver can be registered or associated with at least one cell, i.e. it can be associated to a cell such that data can be exchanged between the network and the mobile in the coverage area of the associated cell using a dedicated channel, link or connection. A mobile transceiver may hence register or be associated with a relay station or base station transceiver directly or indirectly, where an indirect registration or association may be through one or more relay transceivers.

Embodiments of a mobile relay apparatus may improve the cellular coverage in a vehicle. A relay node may be used in order to connect multiple terminals inside of the vehicle and provide an aggregated connection to a stationary cellular communication system via a wireless backhaul link to a stationary cellular communications network, for example, over an external vehicle antenna. In the following the link between a stationary base station and an external antenna of a vehicle relay node will be denoted as relay link; the link between a relay node and end user terminals will be denoted as access link.

Such a relay node may, for example, correspond to a relay as defined in 3^{rd} Generation Partnership Project (3GPP) Release 10, a moving relay as currently discussed in 3GPP Release 12 study groups and in current research literature, a wireless repeater (analog or digital), or a femto cell with a wireless backhaul connection. In case of a femto cell, the wireless backhaul connection could be provided over a separate cellular communication terminal, e.g., a 2G/3G/4G modem. It is another finding that for the relay link and for the access link, respectively, the same or different frequency and spectrum resources can be used. Note that for the relay link and for the access link, respectively, the same or different frequency and spectrum resources can be used.

Note that in the following description of embodiments the term "femto cell" will be used as a synonym for the term "Home eNB" as used in 3GPP standards, for small cells, such as micro, pico, femto cells, etc., as well as relay nodes defined according to 3GPP Release 10 & following releases.

The transceiver module 12, 22, which may comprise transmitter and receiver elements or components, may correspond to one or more transceiver/transmitter/receiver units, one or more transceiver/transmitter/receiver devices, any means for transceiving/- transmitting/receiving, etc. In embodiments a transceiver module 12, 22 may comprise typical transmitter and/or receiver components. Such components may comprise one or more transmit and/or receive antenna connectors or antennas, a Low Noise Amplifier (LNA), a Power Amplifier (PA), one or more filters, one or more converters, one or more mixers, one or more duplexers, one or more diplexers etc.

In embodiments the interface 14, 24 may correspond to any interface adapted to or configured for the respective communication or access technology, which may be wireless or wire line communication. An interface may use a certain access technology, protocol, medium, etc. to establish a connection between backhaul modem apparatus 10 and the access base station transceiver apparatus 20. As an example, in an embodiment the interfaces 14, 24 may correspond to an Internet Protocol (IP) based communication interface, e.g. a Registered Jack 45 (RJ 45) based connection to exchange information in terms of binary data packets. In embodiments, any other interface is conceivable to establish a connection or communication link between the two apparatuses, be it based on analog or digital communication.

A control module 16, 26 may correspond to one or more control units, one or more control devices, or any means for controlling. In some embodiments a control module 14, 24 may be implemented in software, which is executable on accordingly adapted hardware, such as a processor, a Digital Signal Processor (DSP), a multi-purpose processor, or the like.

Radio resources are to be understood as time, frequency, code or spatial resources used for the respective communication, in one or in both directions. Time resources may correspond to any element of the group of a radio frame, a sub-frame, a slot, a time transmission interval, a symbol etc. Frequency resources may correspond to any element of the group of a frequency, a bandwidth, a sub-bandwidth, a carrier, a subcarrier, etc. Code resources may correspond to any element of the group of a scrambling code, a channelization code, an orthogonal code, a variable spreading factor code, an interleaver code etc. Spatial resources may correspond to any element of the group of an antenna, a beam, a spatial channel, a spatial sub-channel, an antenna pattern, a lobe etc. In embodiments the first set of radio resources and the second set of radio resources may correspond to subsets of a system set of radio resources used for communicating in the mobile communication system 600, for example comprising available time, frequency, code, and spatial resources of the system.

In some embodiments the control module 16 of the backhaul modem 100 is configured to receive information related to the first set of radio resources from the backhaul base station transceiver 500 using the transceiver module 12. This can, for example, be part of a packet switched data transmission in the uplink and in the downlink, e.g. by means of a scheduler, which could be located at the backhaul base station transceiver 500. The control module 16 may be configured to communicate the information related to the second set of radio resources to the access base station transceiver 200 such that interference between the communication with the backhaul base station transceiver 500 and the access base station transceiver 200 is controlled. Such information may then be considered at the access base station transceiver when assigning or scheduling radio resources for the communication, uplink and downlink, with the one or more mobile transceivers 400.

In embodiments there are many different options on how such information can be exchanged. For example, the information related to the second set of radio resources may comprise information on which resources to use at the access base station transceiver 200, which resources not to use at the access base station transceiver 200, which groups of resources to use or not to use, which predefined resources can be used etc. For example, a single bit may indicate which one out of two groups of resources should be used, where the grouping can determine any subdivision of the available radio resources.

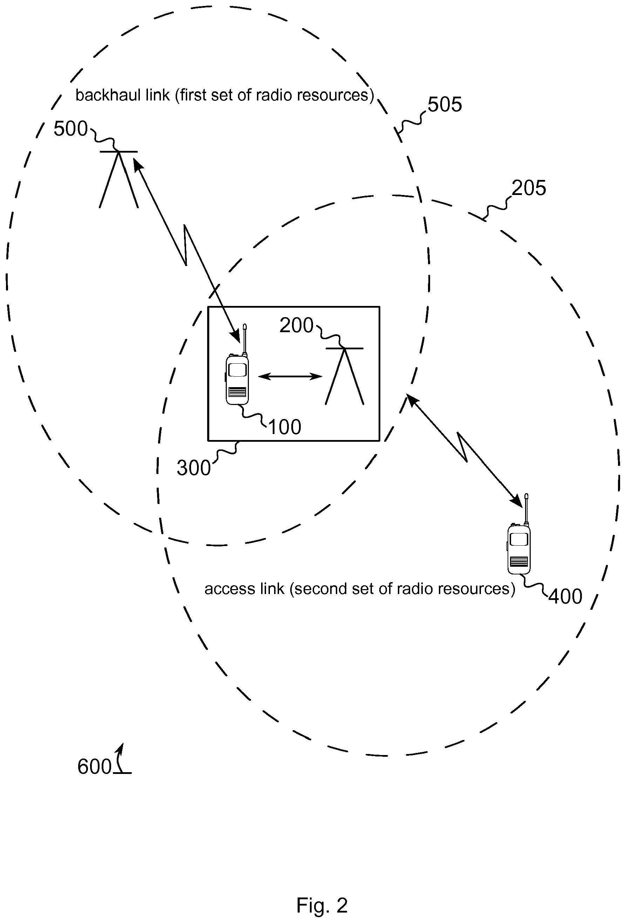

Fig. 2 shows further embodiments in a network scenario. Fig. 2 depicts an access base station transceiver 500 of the mobile communication system 600, as already depicted in Fig. 1, which generates a cell or service coverage area 505. In the coverage area 505 there is an embodiment of a relay station transceiver 300. The relay station transceiver 300 may assume the role of a mobile transceiver as backhaul modem 100 towards the mobile communication system 500, its base station transceiver 500, respectively. The relay station transceiver 300 further comprises an access base station transceiver 200, which generates another cell or coverage area 205 to communicate with a mobile transceiver 400. Towards the mobile transceiver 400 the relay station transceiver 300 assumes the role of a base station transceiver 200. As indicated in Fig. 2 the relay station transceiver 300 is located in an area in which the coverage areas 505 and 205 overlap, and in particular the backhaul modem 100 resides within the coverage area 205 of the base station transceiver 200. The backhaul modem 200 and the access base station transceiver 100 may hence generate interference to each other if they use the same radio resources.

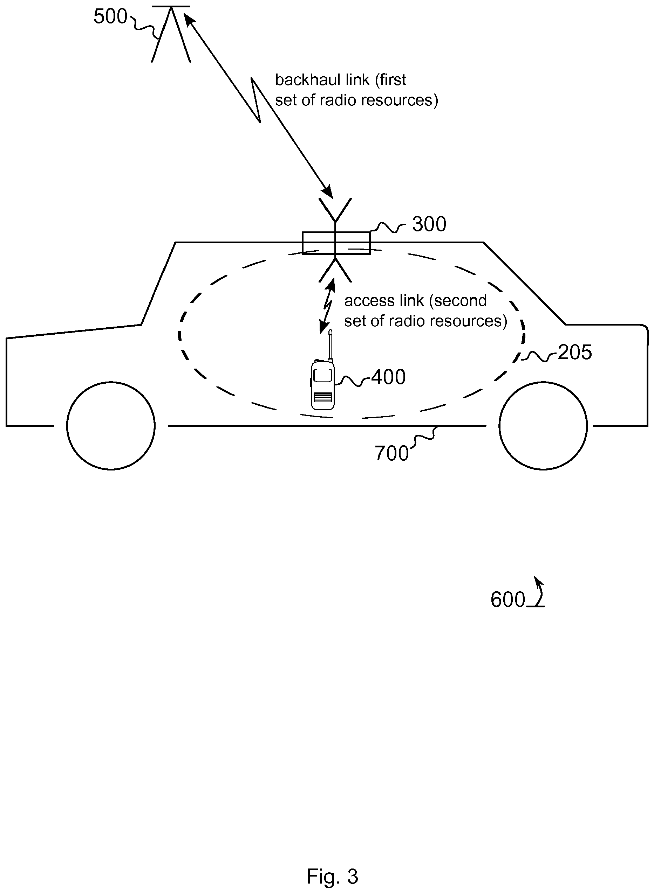

Fig. 3 shows an embodiment of a mobile relay station transceiver 300 in a vehicle 700. Embodiments also provide a vehicle comprising an embodiment of the relay station transceiver 300. Much like in the above embodiment described with the help of Fig. 2, the mobile relay station transceiver 300 connects through a base station transceiver 500 to the mobile communication system 600 and assumes a role similar to a mobile transceiver directly communicating with a base station transceiver 500. The inside of the vehicle 700 is covered by a cell 205 generated by the mobile relay station transceiver 300, its access base station transceiver 200, respectively, e.g. a vehicular femto cell to serve mobile transceiver 400 located inside the vehicle 700. Towards the mobile transceiver 400 the mobile relay station transceiver 300 assumes the role of a serving base station transceiver also referred to as access base station transceiver 200. The vehicle 700 is shown as a car, but can be any vehicle in other embodiments; further examples are buses, trains, ships, planes, etc.

Embodiments may use the standard air interface of the backhaul connection/link and/or transmit information about resource usage from the backhaul modem 100 to the vehicular small cell 200 such that the backhaul modem 100 and the connections in the vehicular small cell 200 use (mostly or even always) different resources in a way that the interference between backhaul link and vehicular small cell 200 is reduced or even minimized. The first set of radio resources (for the backhaul link) and the second set of radio resources (for the access link) are comprised in the same frequency band in some embodiments. In some embodiments the control module 16 may be configured to determine the information related to the second set of radio resources such that a set of common radio resources, which are used in the first set of radio resources and in the second set of radio resources, is reduced or even minimized.

Two different embodiments will be detailed in the following. For the rest of the document, embodiments are explained with the LTE air interface technology. In some embodiments the backhaul modem apparatus 10 software records a "Subcarrier Usage History" (SUH) over a defined time T. The control module 16 at the backhaul modem 100 can be configured to store information related to a usage history of the radio resources of the first set of radio resources over a time period T and the control module 16 can be configured to provide information related to the usage history to the access base station transceiver 200 using the interface 12. The control module 26 at the access base station transceiver 200 can be configured to obtain information related to a usage history of the radio resources of the first set of radio resources over a time period T from the backhaul modem 100 using the interface 24. This set of data (information related to usage history) may record which subcarriers the Physical Resource Blocks (PRB) assigned by the external backhaul base station transceiver 500 are using - both in uplink and in downlink.

It may be expected that the scheduler of the external eNB's (access base station transceiver 500) may use a certain set of subcarriers preferably over time. The SUH may be reported regularly to the VSC 200 scheduler, which then may assign PRBs to the in car UEs 400 that use subcarriers least often used in the last SUH. In this embodiment the VSC 200 scheduler may tend to use subcarriers, which the external eNB 500 does not use frequently, thus lowering the level of interference between backhaul 100 and VSC 200. In some embodiments, this method may automatically ensure that subcarriers are preferably used, for which the Network Access Device (NAD, e.g. the backhaul modem 100) has bad radio conditions, for example, as the macro eNB 500 might not use those) and thus resource usage is automatically improved or even optimized. In some embodiments the vehicular small cell 200 scheduler may use different resource blocks than the scheduler of the corresponding backhaul base station transceiver 500.

In further embodiments, additionally or alternatively, the backhaul modem 100 may manipulate Sounding Reference Symbols (SRS) and/or Channel Quality Information (CQI). The control module 16 can be configured to provide information related to a quality of radio resources to the backhaul base station transceiver 500, e.g. in terms of radio channel quality or interference conditions on the respective radio resources. The information related to the quality of the radio resources may relate to one or more elements of the group of a Bit Error Rate (BER), a bit energy over noise density, a Signal-to-Noise Ratio (SNR), a Signal-to-Interference Ratio (SIR), a Signal-to-Interference-and-Noise Ratio (SINR), a Receive Signal Code Power (RSCP), a Receive Signal Strength Indicator (RSSI), etc. The control module 16 may be further configured to provide information related to a degraded quality of the radio resources of the second set of radio recourses to the backhaul base station transceiver 500. In some embodiments the backhaul modem 100 software may manipulate the small band CQI and SRS measurements/signals of a defined part of the total bandwidth such that the external eNB 500 scheduler assumes that the RF conditions for this part of the total bandwidth are bad for the backhaul UE 100. In this case the external eNB 500 scheduler may try to use PRBs with subcarriers of other parts of the total bandwidth, and so sparing part of the spectrum. In conjunction with the above such an embodiment may achieve further separation between the subcarriers used by the VSC 200 and external eNB 500 schedulers.

In further embodiments the control module 16 of the backhaul modem apparatus 10 may be configured to obtain information related to a load condition of the access base station transceiver 200 from the access base station transceiver 200 using the interface 14. Correspondingly, the control module 26 of the access base station transceiver apparatus 20 may be configured to provide information related to a load condition of the access base station transceiver 200 to the backhaul modem 100 using the interface 24. Knowledge of the load or resource utilization at the access base station transceiver 200 may then be used at the backhaul modem 100 to achieve an according balance between the backhaul link resources and the access link resources, the first set of radio resources and the second set of radio resource, respectively. The control module 16 at the backhaul modem apparatus 10 may be configured to base the information related to the degraded quality of the radio resources of the second set of radio recourses on the information related to the load condition at the access base station transceiver 200. The backhaul modem 100 may manipulate the measurements or their reports based on the load at the access base station transceiver 200 to control, coordinate and/or manage the interference and resource utilization on the two links.

Embodiments may limit the interference between backhaul link and VSC 200 in the shared carrier case without a new direct interface between the VSC 200 and the external eNBs 500. Embodiments may provide a method of interference management, which is easier to implement without network operator impact and it is dynamic enough to cope with the high velocities of different vehicles.

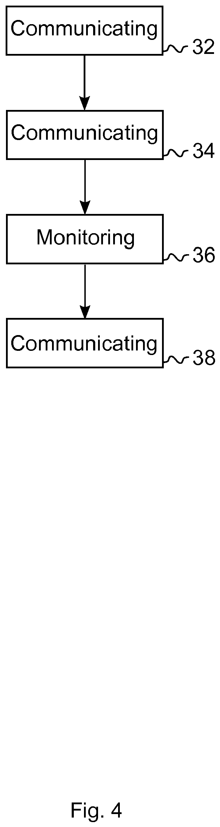

Fig. 4 shows a block diagram of a flow chart of an embodiment of a method for a backhaul modem 100 of a relay station transceiver 300. The relay station transceiver 300 comprises the backhaul modem 100 for communicating with one or more backhaul base station transceivers 500 of a mobile communication system 600. The relay station transceiver 300 comprises an access base station transceiver 200 for generating at least one cell of the mobile communication system 600 for communicating with one or more mobile transceivers 400. The method comprises communicating 32 with the one or more backhaul base station transceivers 500 of the mobile communication system 600 using a first set of radio resources, and communicating 34 with the access base station transceiver 200. The method further comprises monitoring 36 the first set of radio resources used to communicate with the one or more backhaul base station transceivers 500 of the mobile communication system 600. The method further comprises communicating 38 information related to a second set of radio resources with the access base station transceiver 200. The second set of radio resources is different from the first set of radio resources.

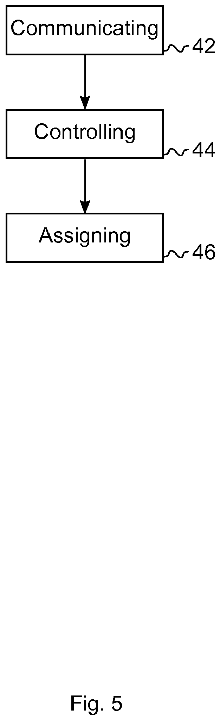

Fig. 5 shows a block diagram of a flow chart of an embodiment of a method for an access base station transceiver 200 of a relay station transceiver 300. The relay station transceiver 300 comprises a backhaul modem 100 for communicating with one or more backhaul base station transceivers 500 of a mobile communication system 600 using a first set of radio resources. The relay station transceiver 300 comprises the access base station transceiver 200 for generating at least one cell of the mobile communication system 600 for communicating with one or more mobile transceivers 400. The method comprises communicating 42 with the one or more mobile transceivers 400 using a second set of radio resources, and communicating 44 information related to the second set of radio resources with the backhaul modem 100. The method further comprises assigning 46 radio resources from the second set of radio resources to communicate with the one or more mobile transceivers 400. The second set of radio resources is different from the first set of radio resources.

A further embodiment is a computer readable storage medium storing instructions which, when executed by a computer, cause the computer to implement one of the methods described herein. Other embodiments are a computer program or a computer program product having a program code for performing anyone of the above described methods, when the computer program or computer program product is executed on a processor, computer, or programmable hardware.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for transceiving ", "means for transmitting", "means for receiving", "means for controlling", etc., may be provided through the use of dedicated hardware, such as "a transceiver", "a transmitter", "a receiver", "a controller", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended.

It is further to be noted that methods disclosed in the specification or in the claims may be implemented by a device having means for performing each of the respective steps of these methods.

## Claims

1. An apparatus (10) for a backhaul modem (100) of a relay station transceiver (300), the relay station transceiver (300) comprising the backhaul modem (100) for communicating with one or more backhaul base station transceivers (500) of a mobile communication system (600), and the relay station transceiver (300) comprising an access base station transceiver (200) for generating at least one cell of the mobile communication system (600) for communicating with one or more mobile transceivers (400), the apparatus (10) comprising
a transceiver module (12) to communicate with the one or more backhaul base station transceivers (500) of the mobile communication system (600) using a first set of radio resources;
an interface (14) to communicate with the access base station transceiver (200); and
a control module (16) to
control the transceiver module (12) and the interface (14);
monitor the first set of radio resources used to communicate with the one or more backhaul base station transceivers (500) of the mobile communication system (600) using the transceiver module (12);
communicate information related to a second set of radio resources with the access base station transceiver (200) using the interface (14), the second set of radio resources being different from the first set of radio resources,
wherein the first set of radio resources and the second set of radio resources are comprised in the same frequency band.

2. The apparatus (10) of claim 1, wherein the control module (16) is configured to receive information related to the first set of radio resources from the backhaul base station transceiver (500) using the transceiver module (12), and wherein the control module (16) is configured to communicate the information related to the second set of radio resources to the access base station transceiver (200) such that interference between the communication with the backhaul base station transceiver (500) and the access base station transceiver (200) is controlled.

3. The apparatus (10) of one of the preceding claims, wherein the control module (16) is configured to determine the information related to the second set of radio resources such that a set of common radio resources, which are used in the first set of radio resources and in the second set of radio resources, is reduced.

4. The apparatus (10) of one of the preceding claims, wherein the first set of radio resources and the second set of radio resources are a subset of a system set of radio resources used for communicating in the mobile communication system (600).

5. The apparatus (10) of one of the preceding claims, wherein the control module (16) is configured to provide information related to a quality of radio resources to the backhaul base station transceiver (500) and wherein the control module (16) is configured to provide information related to a degraded quality of the radio resources of the second set of radio recourses to the backhaul base station transceiver (500).

6. The apparatus (10) of claims 5, wherein the control module (16) is configured to obtain information related to a load condition of the access base station transceiver (200) from the access base station transceiver (200) using the interface (14), and wherein the control module (16) is configured to base the information related to the degraded quality of the radio resources of the second set of radio recourses on the information related to the load condition at the access base station transceiver (200).

7. The apparatus (10) of one of the preceding claims, wherein the control module (16) is configured to store information related to a usage history of the radio resources of the first set of radio resources over a time period and wherein the control module (16) is configured to provide information related to the usage history to the access base station transceiver (200) using the interface (12).

8. An apparatus (20) for an access base station transceiver (200) of a relay station transceiver (300), the relay station transceiver (300) comprising a backhaul modem (100) for communicating with one or more backhaul base station transceivers (500) of a mobile communication system (600) using a first set of radio resources, and the relay station transceiver (300) comprising the access base station transceiver (200) for generating at least one cell of the mobile communication system (600) for communicating with one or more mobile transceivers (400), the apparatus (20) comprising
a transceiver module (22) to communicate with the one or more mobile transceivers (400) using a second set of radio resources;
an interface (24) to communicate with the backhaul modem (100); and
a control module (26) to
control the transceiver module (26) and the interface (24);
communicate information related to the second set of radio resources with the backhaul modem (100),
assign radio resources from the second set of radio resources to the transceiver module (22) to communicate with the one or more mobile transceivers (400), the second set of radio resources being different from the first set of radio resources,
wherein the first set of radio resources and the second set of radio resources are comprised in the same frequency band.

9. The apparatus (20) of the preceding claim, wherein the first set of radio resources and the second set of radio resources are a subset of a system set of radio resources used for communicating in the mobile communication system (600).

10. The apparatus (20) of one of the claims 8 to 9, wherein the control module (26) is configured to obtain information related to a usage history of the radio resources of the first set of radio resources over a time period from the backhaul modem (100) using the interface (24).

11. The apparatus (20) of one of the claims 8 to 10, wherein the control module (26) is configured to provide information related to a load condition of the access base station transceiver (200) to the backhaul modem (100) using the interface (24).

12. A method for a backhaul modem (100) of a relay station transceiver (300), the relay station transceiver (300) comprising the backhaul modem (100) for communicating with one or more backhaul base station transceivers (500) of a mobile communication system (600), and the relay station transceiver (300) comprising an access base station transceiver (200) for generating at least one cell of the mobile communication system (600) for communicating with one or more mobile transceivers (400), the method comprising
communicating (32) with the one or more backhaul base station transceivers (500) of the mobile communication system (600) using a first set of radio resources; communicating (34) with the access base station transceiver (200);
monitoring (36) the first set of radio resources used to communicate with the one or more backhaul base station transceivers (500) of the mobile communication system (600); and
communicating (38) information related to a second set of radio resources with the access base station transceiver (200), the second set of radio resources being different from the first set of radio resources,
wherein the first set of radio resources and the second set of radio resources are comprised in the same frequency band.

13. A method for an access base station transceiver (200) of a relay station transceiver (300), the relay station transceiver (300) comprising a backhaul modem (100) for communicating with one or more backhaul base station transceivers (500) of a mobile communication system (600) using a first set of radio resources, and the relay station transceiver (300) comprising the access base station transceiver (200) for generating at least one cell of the mobile communication system (600) for communicating with one or more mobile transceivers (400), the method comprising
communicating (42) with the one or more mobile transceivers (400) using a second set of radio resources;
communicating (44) information related to the second set of radio resources with the backhaul modem (100); and
assigning (46) radio resources from the second set of radio resources to communicate with the one or more mobile transceivers (400), the second set of radio resources being different from the first set of radio resources,
wherein the first set of radio resources and the second set of radio resources are comprised in the same frequency band.

14. A computer program having a program code for performing at least one of the methods of claims 12 or 13, when the computer program is executed on a computer, a processor, or a programmable hardware component.

## Patentansprüche

1. Eine Vorrichtung (10) für ein Backhaul-Modem (100) eines Relaisstation-Sendeempfängers (300), der Relaisstation-Sendeempfänger (300) umfassend ein Backhaul-Modem (100) zum Kommunizieren mit einer oder mehreren Backhaul-Basisstation-Sendeempfängern (500) eines Mobilkommunikationssystems (600), und der Relaisstation-Sendeempfänger (300) umfassend einen Zugriffs-Basisstation-Sendeempfänger (200) zum Erzeugen von zumindest einer Zelle des Mobilkommunikationssystems (600) zum Kommunizieren mit einem oder mehreren mobilen Sendeempfängern (400), die Vorrichtung (10) umfassend:
ein Sendeempfängermodul (12) zum Kommunizieren mit dem einen oder den mehreren Backhaul-Basisstation-Sendeempfängern (500) des Mobilkommunikationssystems (600) unter Verwendung eines ersten Satzes aus Funkressourcen;
eine Schnittstelle (14) zum Kommunizieren mit dem Zugriffs-Basisstation-Sendeempfänger (200); und
ein Steuerungsmodul (16) zum
Steuern des Sendeempfängermoduls (12) und der Schnittstelle (14);
Überwachen des ersten Satzes aus Funkressourcen, die zum Kommunizieren mit dem einen oder den mehreren Backhaul-Basisstation-Sendeempfängern (500) des Mobilkommunikationssystems (600) unter Verwendung des Sendeempfängermoduls (12) verwendet werden;
Kommunizieren von Informationen bezogen auf einen zweiten Satz aus Funkressourcen mit dem Zugriffs-Basisstation-Sendeempfänger (200) unter Verwendung der Schnittstelle (14), wobei sich der zweite Satz aus Funkressourcen von dem ersten Satz aus Funkressourcen unterscheidet;
wobei der erste Satz aus Funkressourcen und der zweite Satz aus Funkressourcen in demselben Frequenzband umfasst sind.

2. Die Vorrichtung (10) gemäß Anspruch 1, wobei das Steuerungsmodul (16) ausgebildet ist, um Informationen bezogen auf den ersten Satz aus Funkressourcen von dem Backhaul-Basisstation-Sendeempfänger (500) unter Verwendung des Sendeempfängermoduls (12) zu empfangen, und wobei das Steuerungsmodul (16) ausgebildet ist, um die Informationen bezogen auf den zweiten Satz aus Funkressourcen zu dem Zugriffs-Basisstation-Sendeempfänger (200) derart zu kommunizieren, dass die Interferenz zwischen der Kommunikation mit dem Backhaul-Basisstation-Sendeempfänger (500) und dem Zugriffs-Basisstation-Sendeempfänger (200) gesteuert wird.

3. Die Vorrichtung (10) gemäß einem der vorangehenden Ansprüche, wobei das Steuerungsmodul (16) ausgebildet ist, um die Informationen bezogen auf den zweiten Satz aus Funkressourcen derart zu bestimmen, dass ein Satz aus gemeinsamen Funkressourcen, die in dem ersten Satz aus Funkressourcen und in dem zweiten Satz aus Funkressourcen verwendet werden, reduziert wird.

4. Die Vorrichtung (10) gemäß einem der vorangehenden Ansprüche, wobei der erste Satz aus Funkressourcen und der zweite Satz aus Funkressourcen ein Teilsatz eines Systemsatzes aus Funkressourcen sind, die zum Kommunizieren in dem Mobilkommunikationssystem (600) verwendet werden.

5. Die Vorrichtung (10) gemäß einem der vorangehenden Ansprüche, wobei das Steuerungsmodul (16) ausgebildet ist, um Informationen bezogen auf eine Qualität von Funkressourcen an den Backhaul-Basisstation-Sendeempfänger (500) bereitzustellen und wobei das Steuerungsmodul (16) ausgebildet ist, um Informationen bezogen auf eine verschlechterte Qualität der Funkressourcen des zweiten Satzes aus Funkressourcen an den Backhaul-Basisstation-Sendeempfänger (500) bereitzustellen.

6. Die Vorrichtung (10) gemäß Anspruch 5, wobei das Steuerungsmodul (16) ausgebildet ist, Informationen bezogen auf einen Last-Zustand des Zugriffs-Basisstation-Sendeempfängers (200) von dem Zugriffs-Basisstation-Sendeempfänger (200) unter Verwendung der Schnittstelle (14) zu erhalten, und wobei das Steuerungsmodul (16) ausgebildet ist, um Informationen bezogen auf die verschlechterte Qualität der Funkressourcen des zweiten Satzes aus Funkressourcen auf die Informationen zu basieren, die sich auf den Last-Zustand an dem Zugriffs-Basisstation-Sendeempfänger (200) beziehen.

7. Die Vorrichtung (10) gemäß einem der vorangehenden Ansprüche, wobei das Steuerungsmodul (16) ausgebildet ist, um Informationen bezogen auf eine Verwendungshistorie der Funkressourcen des ersten Satzes aus Funkressourcen über eine Zeitperiode zu speichern und wobei das Steuerungsmodul (16) ausgebildet ist, um Informationen bezogen auf die Verwendungshistorie an den Zugriffs-Basisstation-Sendeempfänger (200) unter Verwendung der Schnittstelle (12) bereitzustellen.

8. Eine Vorrichtung (20) für einen Zugriffs-Basisstation-Sendeempfänger (200) eines Relaisstation-Sendeempfängers (300), der Relaisstation-Sendeempfänger (300) umfassend ein Backhaul-Modem (100) zum Kommunizieren mit einem oder mehreren Backhaul-Basisstation-Sendeempfängern (500) eines Mobilkommunikationssystems (600) unter Verwendung eines ersten Satzes aus Funkressourcen, und der Relaisstation-Sendeempfänger (300) umfassend den Zugriffs-Basisstation-Sendeempfänger (200) zum Erzeugen von zumindest einer Zelle des Mobilkommunikationssystems (600) zum Kommunizieren mit einem oder mehreren mobilen Sendeempfängern (400), das Vorrichtung (20) umfassend:
ein Sendeempfängermodul (22) zum Kommunizieren mit dem einen oder den mehreren mobilen Sendeempfängern (400) unter Verwendung eines zweiten Satzes aus Funkressourcen;
eine Schnittstelle (24) zum Kommunizieren mit dem Backhaul-Modem (100); und
ein Steuerungsmodul (26) zum
Steuern des Sendeempfängermoduls (26) und der Schnittstelle (24);
Kommunizieren von Informationen bezogen aus den zweiten Satz aus Funkressourcen mit dem Backhaul-Modem (100),
Zuweisen von Funkressourcen von dem zweiten Satz aus Funkressourcen zu dem Sendeempfängermodul (22) zum Kommunizieren mit dem einen oder den mehreren mobilen Sendeempfängern (400), wobei sich der zweite Satz aus Funkressourcen von dem ersten Satz aus Funkressourcen unterscheidet;
wobei der erste Satz aus Funkressourcen und der zweite Satz aus Funkressourcen in demselben Frequenzband umfasst sind.

9. Die Vorrichtung (10) gemäß dem vorangehenden Anspruch, wobei der erste Satz aus Funkressourcen und der zweite Satz aus Funkressourcen ein Teilsatz eines Systemsatzes aus Funkressourcen sind, die zum Kommunizieren in dem Mobilkommunikationssystem (600) verwendet werden.

10. Die Vorrichtung (10) gemäß einem der Ansprüche 8 bis 9, wobei das Steuerungsmodul (26) ausgebildet ist, um Informationen bezogen auf eine Verwendungshistorie der Funkressourcen des ersten Satzes aus Funkressourcen über eine Zeitperiode von dem Backhaul-Modem (100) unter Verwendung der Schnittstelle (24) zu erhalten.

11. Die Vorrichtung (10) gemäß einem der Ansprüche 8 bis 10, wobei das Steuerungsmodul (26) ausgebildet ist, um Informationen bezogen auf einen Lastzustand des Zugriffs-Basisstation-Sendeempfängers (200) an das Backhaul-Modem (100) unter Verwendung der Schnittstelle (24) bereitzustellen.

12. Ein Verfahren für ein Backhaul-Modem (100) eines Relaisstation-Sendeempfängers (300), der Relaisstation-Sendeempfänger (300) umfassend das Backhaul-Modem (100) zum Kommunizieren mit einem oder mehreren Backhaul-Basisstation-Sendeempfängern (500) eines Mobilkommunikationssystems (600), und der Relaisstation-Sendeempfänger (300) umfassend einen Zugriffs-Basisstation-Sendeempfänger (200) zum Erzeugen von zumindest einer Zelle des Mobilkommunikationssystems (600) zum Kommunizieren mit einem oder mehreren mobilen Sendeempfängern (400), das Verfahren umfassend:
Kommunizieren (32) mit dem einen oder den mehreren Backhaul-Basisstation-Sendeempfängern (500) des Mobilkommunikationssystems (600) unter Verwendung eines ersten Satzes aus Funkressourcen;
Kommunizieren (34) mit dem Zugriffs-Basisstation-Sendeempfänger (200);
Überwachen (36) des ersten Satzes aus Funkressourcen, die zum Kommunizieren mit dem einen oder den mehreren Backhaul-Basisstation-Sendeempfängern (500) des Mobilkommunikationssystems (600) verwendet werden; und
Kommunizieren (38) von Informationen bezogen auf einen zweiten Satz aus Funkressourcen mit dem Zugriffs-Basisstation-Sendeempfänger (200), wobei sich der zweite Satz aus Funkressourcen von dem ersten Satz aus Funkressourcen unterscheidet;
wobei der erste Satz aus Funkressourcen und der zweite Satz aus Funkressourcen in demselben Frequenzband umfasst sind.

13. Ein Verfahren für einen Zugriffs-Basisstation-Sendeempfänger (200) eines Relaisstation-Sendeempfängers (300), der Relaisstation-Sendeempfänger (300) umfassend ein Backhaul-Modem (100) zum Kommunizieren mit einer oder mehreren Backhaul-Basisstation-Sendeempfängern (500) eines Mobilkommunikationssystems (600) unter Verwendung eines ersten Satzes aus Funkressourcen, und der Relaisstation-Sendeempfänger (300) umfassend den Zugriffs-Basisstation-Sendeempfänger (200) zum Erzeugen von zumindest einer Zelle des Mobilkommunikationssystems (600) zum Kommunizieren mit einem oder mehreren mobilen Sendeempfängern (400), das Verfahren umfassend:
Kommunizieren (42) mit dem einen oder den mehreren mobilen Sendeempfängern (400) unter Verwendung eines zweiten Satzes aus Funkressourcen;
Kommunizieren (44) von Informationen bezogen auf den zweiten Satz aus Funkressourcen mit dem Backhaul-Modem (100); und
Zuweisen (46) von Funkressourcen von dem zweiten Satz aus Funkressourcen zum Kommunizieren mit dem einen oder den mehreren mobilen Sendeempfängern (400), wobei sich der zweite Satz aus Funkressourcen von dem ersten Satzes aus Funkressourcen unterscheidet;
wobei der erste Satz aus Funkressourcen und der zweite Satz aus Funkressourcen in demselben Frequenzband umfasst sind.

14. Ein Computerprogramm mit einem Programmcode zum Durchführen von zumindest einem der Verfahren gemäß Anspruch 12 oder 13, wenn das Computerprogramm auf einem Computer, einem Prozessor oder einer programmierbaren Hardwarekomponente ausgeführt wird.

## Revendications

1. Appareil (10) pour modem de réseau terrestre (100) d'un émetteur-récepteur de station relais (300), l'émetteur-récepteur de station relais (300) comprenant le modem de réseau terrestre (100) pour communiquer avec un ou plusieurs émetteurs-récepteurs de station de base de réseau terrestre (500) d'un système de communications mobiles (600), et l'émetteur-récepteur de station relais (300) comprenant un émetteur-récepteur de station de base d'accès (200) pour générer au moins une cellule du système de communications mobiles (600) pour communiquer avec un ou plusieurs émetteurs-récepteurs mobiles (400), l'appareil (10) comprenant
un module émetteur-récepteur (12) pour communiquer avec les un ou plusieurs émetteurs-récepteurs de station de base de réseau terrestre (500) du système de communications mobiles (600) à l'aide d'un premier ensemble de ressources radio ;
une interface (14) pour communiquer avec l'émetteur-récepteur de station de base d'accès (200) ; et
un module de commande (16) pour
commander le module émetteur-récepteur (12) et l'interface (14);
contrôler le premier ensemble de ressources radio utilisé pour communiquer avec les un ou plusieurs émetteurs-récepteurs de station de base de réseau terrestre (500) du système de communications mobiles (600) à l'aide du module émetteur-récepteur (12) ;
communiquer des informations relatives à un second ensemble de ressources radio avec l'émetteur-récepteur de station de base d'accès (200) à l'aide de l'interface (14), le second ensemble de ressources radio étant différent du premier ensemble de ressources radio,
dans lequel le premier ensemble de ressources radio et le second ensemble de ressources radio sont compris dans la même bande de fréquences.

2. Appareil (10) selon la revendication 1, dans lequel le module de commande (16) est configuré pour recevoir des informations relatives au premier ensemble de ressources radio depuis l'émetteur-récepteur de station de base de réseau terrestre (500) à l'aide du module émetteur-récepteur (12), et dans lequel le module de commande (16) est configuré pour communiquer les informations relatives au second ensemble de ressources radio à l'émetteur-récepteur de station de base d'accès (200) de manière à réguler le brouillage de la communication entre l'émetteur-récepteur de station de base de réseau terrestre (500) et l'émetteur-récepteur de station de base d'accès (200).

3. Appareil (10) selon l'une des revendications précédentes, dans lequel le module de commande (16) est configuré pour déterminer les informations relatives au second ensemble de ressources radio de manière à réduire un ensemble de ressources radio communes, qui sont utilisées dans le premier ensemble de ressources radio et dans le second ensemble de ressources radio.

4. Appareil (10) selon l'une des revendications précédentes, dans lequel le premier ensemble de ressources radio et le second ensemble de ressources radio sont un sous-ensemble d'un ensemble système de ressources radio utilisé pour communiquer dans le système de communications mobiles (600).

5. Appareil (10) selon l'une des revendications précédentes, dans lequel le module de commande (16) est configuré pour fournir des informations relatives à une qualité de ressources radio à l'émetteur-récepteur de station de base de réseau terrestre (500) et dans lequel le module de commande (16) est configuré pour fournir des informations relatives à une qualité dégradée des ressources radio du second ensemble de ressources radio à l'émetteur-récepteur de station de base de réseau terrestre (500).

6. Appareil (10) selon la revendication 5, dans lequel le module de commande (16) est configuré pour obtenir des informations relatives à un état de charge de l'émetteur-récepteur de station de base d'accès (200) depuis l'émetteur-récepteur de station de base d'accès (200) à l'aide de l'interface (14), et dans lequel le module de commande (16) est configuré pour baser les informations relatives à la qualité dégradée des ressources radio du second ensemble de ressources radio sur les informations relatives à l'état de charge au niveau de l'émetteur-récepteur de station de base d'accès (200).

7. Appareil (10) selon l'une des revendications précédentes, dans lequel le module de commande (16) est configuré pour mémoriser des informations relatives à un historique d'utilisation des ressources du premier ensemble de ressources radio durant une période de temps et dans lequel le module de commande (16) est configuré pour fournir des informations relatives à l'historique d'utilisation à l'émetteur-récepteur de station de base d'accès (200) à l'aide de l'interface (12).

8. Appareil (20) pour émetteur-récepteur de station de base d'accès (200) d'un émetteur-récepteur de station relais (300), l'émetteur-récepteur de station relais (300) comprenant un modem de réseau terrestre (100) pour communiquer avec un ou plusieurs émetteurs-récepteurs de station de base de réseau terrestre (500) d'un système de communications mobiles (600) à l'aide d'un premier ensemble de ressources radio, et l'émetteur-récepteur de station relais (300) comprenant l'émetteur-récepteur de station de base d'accès (200) pour générer au moins une cellule du système de communications mobiles (600) pour communiquer avec un ou plusieurs émetteurs-récepteurs mobiles (400), l'appareil (20) comprenant
un module émetteur-récepteur (22) pour communiquer avec les un ou plusieurs émetteurs-récepteurs mobiles (400) à l'aide d'un second ensemble de ressources radio ;
une interface (24) pour communiquer avec le modem de réseau terrestre (100) ; et
un module de commande (26) pour
commander le module émetteur-récepteur (26) et l'interface (24) ;
communiquer des informations relatives au second ensemble de ressources radio avec le modem de réseau terrestre (100),
assigner des ressources radio du second ensemble de ressources radio au module émetteur-récepteur (22) pour communiquer avec les un ou plusieurs émetteurs-récepteurs mobiles (400), le second ensemble de ressources radio étant différent du premier ensemble de ressources radio,
dans lequel le premier ensemble de ressources radio et le second ensemble de ressources radio sont compris dans la même bande de fréquences.

9. Appareil (10) selon la revendication précédente, dans lequel le premier ensemble de ressources radio et le second ensemble de ressources radio sont un sous-ensemble d'un ensemble système de ressources radio utilisé pour communiquer dans le système de communications mobiles (600).

10. Appareil (10) selon l'une des revendications 8 à 9, dans lequel le module de commande (26) est configuré pour obtenir des informations relatives à un historique d'utilisation des ressources radio du premier ensemble de ressources radio durant une période de temps depuis le modem de réseau terrestre (100) à l'aide de l'interface (24).

11. Appareil (10) selon l'une des revendications 8 à 10, dans lequel le module de commande (26) est configuré pour fournir des informations relatives à un état de charge de l'émetteur-récepteur de station de base d'accès (200) au modem de réseau terrestre (100) à l'aide de l'interface (24).

12. Procédé pour modem de réseau terrestre (100) d'un émetteur-récepteur de station relais (300), l'émetteur-récepteur de station relais (300) comprenant le modem de réseau terrestre (100) pour communiquer avec un ou plusieurs émetteurs-récepteurs de station de base de réseau terrestre (500) d'un système de communications mobiles (600), et l'émetteur-récepteur de station relais (300) comprenant un émetteur-récepteur de station de base d'accès (200) pour générer au moins une cellule du système de communications mobiles (600) pour communiquer avec un ou plusieurs émetteurs-récepteurs mobiles (400), le procédé comprenant
la communication (32) avec les un ou plusieurs émetteurs-récepteurs de station de base de réseau terrestre (500) du système de communications mobiles (600) à l'aide d'un premier ensemble de ressources radio ;
la communication (34) avec l'émetteur-récepteur de station de base d'accès (200) ;
le contrôle (36) du premier ensemble de ressources radio utilisé pour communiquer avec les un ou plusieurs émetteurs-récepteurs de station de base de réseau terrestre (500) du système de communications mobiles (600) ; et
la communication (38) d'informations relatives à un second ensemble de ressources radio avec l'émetteur-récepteur de station de base d'accès (200), le second ensemble de ressources radio étant différent du premier ensemble de ressources radio,
dans lequel le premier ensemble de ressources radio et le second ensemble de ressources radio sont compris dans la même bande de fréquences.

13. Procédé pour émetteur-récepteur de station de base d'accès (200) d'un émetteur-récepteur de station relais (300), l'émetteur-récepteur de station relais (300) comprenant un modem de réseau terrestre (100) pour communiquer avec un ou plusieurs émetteurs-récepteurs de station de base de réseau terrestre (500) d'un système de communications mobiles (600) à l'aide d'un premier ensemble de ressources radio, et l'émetteur-récepteur de station relais (300) comprenant l'émetteur-récepteur de station de base d'accès (200) pour générer au moins une cellule du système de communications mobiles (600) pour communiquer avec un ou plusieurs émetteurs-récepteurs mobiles (400), le procédé comprenant
la communication (42) avec les un ou plusieurs émetteurs-récepteurs mobiles (400) à l'aide d'un second ensemble de ressources radio ;
la communication (44) d'informations relatives au second ensemble de ressources radio avec le modem de réseau terrestre (100) ; et
l'assignation (46) de ressources radio du second ensemble de ressources radio pour communiquer avec les un ou plusieurs émetteurs-récepteurs mobiles (400), le second ensemble de ressources radio étant différent du premier ensemble de ressources radio,
dans lequel le premier ensemble de ressources radio et le second ensemble de ressources radio sont compris dans la même bande de fréquences.

14. Programme informatique comportant un code de programme pour exécuter au moins l'un des procédés des revendications 12 ou 13, quand le programme informatique est exécuté sur un ordinateur, un processeur, ou un composant matériel programmable.
